# EUROPEAN PATENT SPECIFICATION

(11) **EP 4 148 834 B1**
(45) Date of publication and mention of the grant of the patent: **30.07.2025**
(21) Application number: 21898476.3
(22) Date of filing: 17.11.2021
(51) Int. Cl.: H01M 4/62, H01M 4/136, H01M 10/052, H01M 4/38, H01M 4/02, H01M 4/1397

(54) **BINDER COMPOSITION FOR MANUFACTURING LITHIUM-SULFUR BATTERY CATHODE, AND LITHIUM-SULFUR BATTERY CATHODE MANUFACTURED THEREFROM**
BINDEMITTELZUSAMMENSETZUNG ZUR HERSTELLUNG EINER LITHIUM-SCHWEFEL-BATTERIEKATHODE UND DARAUS HERGESTELLTE LITHIUM-SCHWEFEL-BATTERIEKATHODE
COMPOSITION DE LIANT POUR LA FABRICATION D'UNE CATHODE DE BATTERIE AU LITHIUM-SOUFRE, ET CATHODE DE BATTERIE AU LITHIUM-SOUFRE FABRIQUÉE À PARTIR DE CELLE-CI

(30) Priority: 27.11.2020 KR 20200162995
(43) Date of publication of application: 15.03.2023
(73) Proprietor: LG Energy Solution, Ltd., Seoul 07335 (KR)
(72) Inventor: LEE, Choonghyeon, Daejeon 34122 (KR); JUNG, Unho, Daejeon 34122 (KR)
(74) Representative: Goddar, Heinz J.
(86) International application number: PCT/KR2021/016822
(87) International publication number: WO 2022/114650

(56) References cited:
- WO-A1-2020/097672
- CN-A- 105 470 518
- CN-A- 109 768 282
- CN-A- 110 808 364
- KR-A- 20040 100 259
- KR-A- 20050 087 977
- KR-A- 20160 142 823
- KR-A- 20200 036 177
- LI GAORAN, LING MIN, YE YIFAN, LI ZHOUPENG, GUO JINGHUA, YAO YINGFANG, ZHU JUNFA, LIN ZHAN, ZHANG SHANQING: "Acacia Senegal -Inspired Bifunctional Binder for Longevity of Lithium-Sulfur Batteries", ADVANCED ENERGY MATERIALS, vol. 5, no. 21, 1 November 2015 (2015-11-01), DE , pages 1 - 8, XP055934391, ISSN: 1614-6832, DOI: 10.1002/aenm.201500878

## Description

### [Technical Field]

The present invention relates to a binder composition for manufacturing a positive electrode of a lithium-sulfur battery, and a positive electrode of a lithium-sulfur battery manufactured thereby.

### [Background Art]

Due to the need for the development of eco-friendly electric and hybrid vehicles and the rapid development of smart IT devices, there is a rapidly increasing demand for batteries with high capacity and high output. Currently, since commercialized lithium-ion batteries use only limited energy density due to technical problems, the development of a lithium sulfur battery, a lithium selenium battery, or a lithium air battery having a higher energy density is attracting attention. Among them, sulfur and oxygen, which are positive electrode active materials in the lithium-sulfur battery and lithium-air battery, have similar physicochemical properties, and their abundant resource reserves are raising expectations for commercialization.

In the case of the lithium-air battery or lithium-sulfur battery using a lithium metal having high reducing power and voltage characteristics, and high reversibility as a negative electrode, and using air or sulfur as a positive electrode, the amount of lithium ions per weight or volume stored in the reaction products Li₂O₂, LiOH, and Li₂S is much higher than that of LiCoO₂ used as the positive electrode of a lithium ion battery, and also since it can store more charges than the lithium ion battery, which uses a graphite-based negative electrode with a maximum Li storage limit of LiC₆, by using lithium metal as a negative electrode, it can exhibit a much higher theoretical energy density than the lithium ion battery. However, despite the high theoretical energy density, since the actual energy density is as low as 20 to 45% of the theoretical value, the lithium-air battery and the lithium-sulfur battery have not yet reached commercialization and are in the early stages of development.

Specifically, in the case of a lithium-air battery, a high overvoltage is required for the Li₂O₂ and Li₂O generated during charging to be decomposed into Li ions and O₂, and it, unlike the lithium-ion battery, adopts an open structure that allows outside air to enter and exit, side reactions and volatilization of the electrolyte are easy to occur due to the inflow of impurities (moisture and carbon dioxide, etc.) from the outside air, and as a result, the performance is rapidly deteriorated.

In addition, in the case of a lithium-sulfur battery, sulfur forming the positive electrode and Li₂S, which is the final product of the reaction, have the property of being an electrically insulator. Accordingly, in the lithium-sulfur battery, an electrolyte with a strong dielectric constant of tetraethylenglycol dimethylether (TEGDME) series is used, and thus as the soluble polysulfide moves from the positive electrode to the negative electrode, it is reduced to a lower monomeric polysulfide, and a shuttle mechanism in which the monomeric polysulfide returns to the positive electrode and then back to the negative electrode will occur. As a result, these insoluble Li₂S and Li₂S₂ may be accumulated on the surface of the negative electrode and other interfaces of the separator. In addition, in the positive electrode, lithium polysulfide (Li₂S₈), which is an intermediate product of the reaction, has high solubility in the organic electrolyte solution, and thus is continuously dissolved out during the discharge reaction, while the amount of positive electrode material is reduced, which leads to a sudden decrease in capacity with the cycle. In addition, since sulfur itself has very low electrical conductivity, it is used together with conductive carbon or polymer, etc. However, in this case, the total energy density of the cell is lowered due to a decrease in the content of sulfur.

In order to solve these problems, various methods, such as design of a porous positive electrode structure, development of additives for preventing overvoltage, or formation of a surface treatment layer, are being researched and developed. Among them, in the case of a lithium-air battery from the viewpoint of the development of the positive electrode, a method of reducing the charge overvoltage by maximizing the reaction rate of lithium ion and oxygen generation during charge with smooth electron transfer by making the discharge product Li₂O₂ uniformly distributed without aggregation inside the dense conductive matrix is being considered. Also, in the case of a lithium-sulfur battery, a method to facilitate the transfer of electrons and lithium ions to lower the charge overvoltage and at the same time to suppress the leaching of lithium polysulfide in the positive electrode, by making the insulator Li₂S uniformly dispersed and distributed in the dense conductive matrix through optimal structural/compositional design is being investigated.

When manufacturing the positive electrode of the lithium-sulfur battery, binder and thickener are used for stabilizing the slurry and binding of electrode elements. However, if only the existing binder and thickener for the lithium-ion battery are used, the effect of increasing the reactivity or increasing the lifetime through the control of the leaching of lithium polysulfide generated in the lithium-sulfur battery cannot be expected. The reactivity can be changed through the addition of a material with a specific functional group that can control the leaching of lithium polysulfide generated from the positive electrode during charge and discharge. However, as the specific material mentioned above is dispersed in the slurry, the physical properties of the electrode may be deteriorated during coating and drying due to the change in rheological properties.

Accordingly, the inventors of the present invention have completed the present invention by continuously researching a binder composition for manufacturing a positive electrode of a lithium-sulfur battery that can solve the above-described problems.

### [Prior Art Document]

### [Patent Document]

(Patent Document 1) Korean Laid-open Patent Publication No. 10-2002-0092029
CN 109768282 A discloses a binder composition for lithium-sulfur battery positive electrode comprising one or a plurality of high-viscosity aqueous binders and highly dispersible aqueous binder with a mass ratio of high viscosity to high dispersible binder of, e.g., 3:1**.**
CN 11080364 A discloses a binder composition for an active material slurry, comprising conductive material, SBR and gum Arabic. The binder composition for an active material slurry is used for a negative electrode.
WO2020/097672 A1 discloses sulfur cathodes for Li-S batteries with binder systems comprising, e.g**.,** gum Arabic, PTFE, PVdF.

### [Disclosure]

### [Technical Problem]

In order to solve the problems above, the present invention provides a binder composition for manufacturing a positive electrode of a lithium-sulfur battery capable of improving initial discharge performance and cycle performance of the battery by adding gum arabic together with a thickener to the binder composition used to manufacture the positive electrode of the lithium-sulfur battery.

### [Technical Solution]

According to the first aspect of the present invention, the present invention provides a binder composition for preparing a positive electrode of a lithium-sulfur battery comprising a binder, a thickener, and gum arabic, wherein the binder is contained in the binder composition in an amount of 40 wt.% to 60 wt.% based on the total weight of the binder composition,
wherein the thickener is contained in the binder composition in an amount of 20 wt.% to 35 wt.% based on the total weight of the binder composition,
wherein gum arabic is contained in the binder composition in an amount of 10 wt.% to 30 wt.% based on the total weight of the binder composition, and
wherein gum arabic is contained in the binder composition in an amount of 30 parts by weight to 100 parts by weight based on 100 parts by weight of the thickener.

Further embodiments are disclosed in the dependent claims.

In one embodiment of the present invention, the binder is selected from the group consisting of polyvinylidene fluoride (PVDF), vinylidene fluoride-hexafluoropropylene copolymer (PVDF-co-HFP), polyvinyl alcohol, polyacrylonitrile, starch, hydroxypropyl cellulose, regenerated cellulose, polyvinylpyrrolidone, polytetrafluoroethylene, polyethylene, polypropylene, polybutyl acrylate, polypropyl acrylate, polyethyl acrylate, polyethylhexyl acrylate, polystyrene, ethylene-propylene-diene polymer (EPDM), sulfonated-EPDM, styrene butadiene rubber (SBR), fluororubber, combinations thereof, and copolymers thereof.

In one embodiment of the present invention, the thickener is selected from the group consisting of carboxymethyl cellulose, methyl cellulose, hydroxypropyl cellulose, methyl hydroxypropyl cellulose, ethyl hydroxyethyl cellulose, methyl ethyl hydroxyethyl cellulose, cellulose gum, and combinations thereof.

The binder is contained in the binder composition in an amount of 40 wt.% to 60 wt.%, based on the total weight of the binder composition.

The thickener is contained in the binder composition in an amount of 20 wt.% to 35 wt.%, based on the total weight of the binder composition.

The gum arabic is contained in the binder composition in an amount of 30 parts by weight to 100 parts by weight relative to 100 parts by weight of the thickener.

According to the second aspect of the present invention, the present invention provides a positive electrode for a lithium-sulfur battery formed by applying a slurry for manufacturing a positive electrode comprising the above-described binder composition, a positive electrode active material, and an electrically conductive material on a positive electrode current collector.

In one embodiment of the present invention, the binder composition is contained in the slurry for manufacturing the positive electrode in an amount of 0.01 to 10 parts by weight, relative to 100 parts by weight of the solid content in the slurry for manufacturing the positive electrode.

In one embodiment of the present invention, the positive electrode active material is contained in the slurry for manufacturing the positive electrode in an amount of 80 parts by weight to 99 parts by weight, relative to 100 parts by weight of the solid content in the slurry for manufacturing the positive electrode.

In one embodiment of the present invention, the electrically conductive material is contained in the slurry for manufacturing the positive electrode in an amount of 0.1 to 15 parts by weight based on 100 parts by weight of the solid content in the slurry for manufacturing the positive electrode.

According to the third aspect of the present invention, the present invention provides a lithium-sulfur battery comprising the above-described positive electrode, a negative electrode, a separator and an electrolyte.

### [Advantageous Effects]

The binder composition for manufacturing a positive electrode of a lithium-sulfur battery according to the present invention contains gum arabic together with a thickener, so that when applied to a lithium-sulfur battery, the initial discharge performance and cycle performance of the battery can be improved.

The binder, the thickener and gum arabic contained in the binder composition are combined together as three components, and when the content of gum arabic is combined so as not to exceed the content of the thickener, the improvement effect of initial discharge performance and cycle performance of the battery may be more excellent.

### [Description of Drawings]

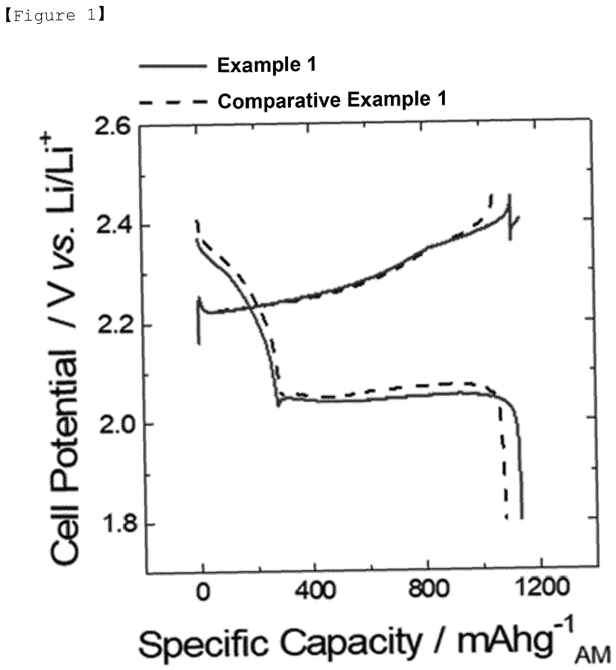

FIG. 1 is a graph showing the charge/discharge profile of the battery potential versus specific capacity by initially charging and discharging lithium-sulfur secondary batteries according to Example 1 and Comparative Example 1.

### [Best Mode]

The embodiments provided according to the present invention can all be achieved by the following description. It is to be understood that the following description is to be understood as describing preferred embodiments of the present invention, and the present invention is not necessarily limited thereto.

With respect to the physical properties described herein, when measurement conditions and methods are not specifically described, the physical properties are measured according to measurement conditions and methods generally used by those skilled in the art.

### Binder composition

The present invention provides a binder composition for preparing a positive electrode of a lithium-sulfur battery comprising a binder, a thickener, and gum arabic, wherein the binder is contained in the binder composition in an amount of 40 wt.% to 60 wt.% based on the total weight of the binder composition,
wherein the thickener is contained in the binder composition in an amount of 20 wt.% to 35 wt.% based on the total weight of the binder composition,
wherein gum arabic is contained in the binder composition in an amount of 10 wt.% to 30 wt.% based on the total weight of the binder composition, and
wherein gum arabic is contained in the binder composition in an amount of 30 parts by weight to 100 parts by weight based on 100 parts by weight of the thickener. Existing binders and thickeners for lithium secondary batteries cannot ensure functionality, such as, control of the leaching of lithium polysulfide that occurs in lithium-sulfur batteries, but the binder composition according to the present invention provides a binder composition more suitable for improving the performance of a lithium-sulfur battery by additionally using gum arabic.

The binder is a material used to improve the adhesive force between the components in the positive electrode and the adhesive force between the positive electrode active material and the positive electrode current collector, and is not particularly limited as long as it is generally used in the relevant technical field. The binder may be used as an emulsion-type binder so that it can be uniformly dispersed in the slurry for manufacturing the positive electrode. The emulsion-type binder may be polyvinylidene fluoride (PVDF), vinylidene fluoride-hexafluoropropylene copolymer (PVDF-co-HFP), polyvinyl alcohol, polyacrylonitrile, starch, hydroxypropyl cellulose, regenerated cellulose, polyvinyl pyrrolidone, polytetrafluoroethylene, polyethylene, polypropylene, polybutyl acrylate, polypropyl acrylate, polyethyl acrylate, polyethylhexyl acrylate, polystyrene, ethylene-propylene-diene polymer (EPDM), sulfonated-EPDM, styrene-butadiene rubber(SBR), fluorine rubber, or various copolymers thereof, and one of these or a mixture of two or more thereof may be used. Here, the copolymer includes not only a block copolymer formed by bonding each polymer, but also a random copolymer formed by mixing and bonding monomers of each polymer. For example, in the present specification, a copolymer of polyethylene and polypropylene is interpreted as a concept including an ethylene-propylene copolymer.

According to the present invention, the binder is contained in the binder composition in an amount of 40 wt.% to 60 wt.%, preferably 45 wt.% to 60 wt.%, more preferably 45 wt.% to 55 wt.%, based on the total weight of the binder composition. If the binder is contained in the binder composition in an amount of less than 40 wt.%, the adhesive force between the components of the positive electrode and the adhesive force between the positive electrode active material and the positive electrode current collector are lowered. If the binder is contained in the binder composition in an amount of more than 60 wt.%, the effect of performance improvement according to the addition of a thickener and gum arabic cannot be expected from the lithium-sulfur battery.

The thickener is basically used to control the viscosity, and a material suitable for use with a binder and gum arabic may be selected as a thickener in view of the physical properties of the slurry for manufacturing the positive electrode, and furthermore, the physical properties of the lithium-sulfur battery. The thickener may be a cellulose-based polymer, and the cellulose-based polymer may be selected from the group consisting of carboxy methyl cellulose (CMC), methyl cellulose (MC), hydroxypropyl cellulose (HPC), methyl hydroxypropyl cellulose (MHPC), ethyl hydroxyethyl cellulose (EHEC), methyl ethylhydroxyethyl cellulose (MEHEC), cellulose gum and combinations thereof. According to one embodiment of the present invention, carboxymethyl cellulose is used as the thickener. The cellulose-based polymer may be in a lithiated form. Since the cellulose-based polymer contains a functional group such as a hydroxyl group or a carboxyl group, it can be lithiated by replacing the hydrogen of the functional group with lithium, and when the cellulose-based polymer is lithiated, it is possible to secure an additional lithium source, which helps to improve the performance of the lithium-sulfur battery.

According to the present invention, the thickener is contained in the binder composition in an amount of 20 wt.% to 35 wt.%, preferably 25 wt.% to 35 wt.%, based on the total weight of the binder composition. If the thickener is contained in the binder composition in an amount of less than 20 wt.%, the viscosity of the slurry for manufacturing the positive electrode is lowered, and thus it is not easy to uniformly disperse the components of the positive electrode and ensure functionality through it. If the thickener is contained in the binder composition in an amount of more than 35 wt.%, the fluidity of the slurry for manufacturing the positive electrode is lowered, and thus it is not easy to uniformly disperse the components of the positive electrode and ensure functionality through it.

In the binder composition, gum is used to secure additional functionality, such as the control of the leaching of lithium polysulfide in the lithium-sulfur battery. Although there are various types of gums such as xanthan gum and guar gum, gum arabic exhibits more special functionality when used together with the above-mentioned binders and thickeners. Gum arabic is obtained by drying or desalting the secretions of the leguminous gum arabic tree (*Acacia senegal* WILLDENOW) or other plants belonging to the same genus, and its main component is polysaccharides. In particular, since a stable emulsion can be obtained in a relatively wide pH range, when used together with the binder and thickener described above, it is possible to secure sufficient functionality related to the performance of the lithium-sulfur battery.

According to the present invention, the gum arabic is contained in the binder composition in an amount of 10 wt.% to 30 wt.%, preferably 15 wt.% to 30 wt.%, more preferably 15 wt.% to 25 wt.%, based on the total weight of the binder composition. If gum arabic is contained in the binder composition in an amount of less than 10 wt.%, it is difficult to secure additional functionality such as the control of the leaching of lithium polysulfide. If gum arabic is contained in the binder composition in an amount of more than 30 wt.%, it is not preferable because overvoltage may occur during initial discharge of the lithium-sulfur battery to which it is applied.

Gum arabic is contained in the binder composition in an amount of 30 parts by weight to 100 parts by weight, preferably 45 parts by weight to 85 parts by weight, and more preferably 60 parts by weight to 70 parts by weight, relative to 100 parts by weight of the thickener. As described above, when gum arabic is used together with a thickener, sufficient functionality can be secured, and it may be more advantageous to secure functionality to be adjusted within the above range.

### Positive electrode and lithium-sulfur battery comprising same

The present invention provides a positive electrode for a lithium-sulfur battery prepared by the above-described binder composition. The positive electrode according to the present invention is prepared by drying and rolling after applying a slurry for preparing a positive electrode on one surface or both surfaces of a positive electrode current collector. The slurry for manufacturing the positive electrode comprises a positive electrode active material and an electrically conductive material together with the binder composition described above. The layer formed by applying/drying/rolling the slurry for manufacturing the positive electrode on the positive electrode current collector is a layer containing the positive electrode active material of the battery and may be expressed as a positive electrode active material layer.

The binder composition is the same as described above. In the slurry for preparing the positive electrode, the binder composition may be adjusted in a direction to maximize the performance of the battery, based on the basic functionality of bonding the components of the positive electrode. According to one embodiment of the present invention, the binder composition is contained in the slurry for manufacturing the positive electrode in an amount of 0.01 parts by weight to 10 parts by weight, preferably 1 part by weight to 8 parts by weight, more preferably 2 parts by weight to 5 parts by weight, relative to 100 parts by weight of the solid content in the slurry for preparing the positive electrode. Here, the solid content in the slurry means the solid components of the positive electrode active material, the electrically conductive material, and the binder composition excluding the solvent used when preparing the slurry. As the functionality is supplemented through the thickener and gum arabic, even if the binder composition is used in a small amount, it is possible to expect an improved effect in terms of adhesion and the performance of the battery. If the binder composition is contained in the slurry for manufacturing the positive electrode in an amount of more than 10 parts by weight, since the content of the positive electrode active material is relatively reduced, it is not preferable in terms of improving the performance of the battery.

The positive electrode current collector is for support of the positive electrode active material, and is not particularly limited as long as it is generally made to have a thickness of 3 to 500 *µ*m, has excellent electrical conductivity and is electrochemically stable in the voltage range of the lithium secondary battery. For example, the positive electrode current collector may be any one metal selected from the group consisting of copper, aluminum, stainless steel, titanium, silver, palladium, nickel, alloys thereof, and combinations thereof. The stainless steel may be surface-treated with carbon, nickel, titanium, or silver, and an aluminum-cadmium alloy may be preferably used as the alloy. In addition, sintered carbon, a nonconductive polymer surface-treated with an electrically conductive material, or a conductive polymer may be used.

The positive electrode current collector can enhance the bonding force with the positive electrode active material by having fine irregularities on its surface, and may be formed in various forms such as film, sheet, foil, mesh, net, porous body, foam, or nonwoven fabric.

The positive electrode active material serves to substantially express the performance of the battery by exchanging electrons from the battery, and the positive electrode active material in the lithium-sulfur battery comprises elemental sulfur. Specifically, the positive electrode active material comprises elemental sulfur (S₈), a sulfur-based compound, or a mixture thereof. The sulfur-based compound comprises Li₂Sₙ(n≥1), an organic sulfur compound or a sulfur-carbon compound (C₂Sₓ)ₙ: x=2.5 ~ 50, n≥2). Since the element sulfur alone does not have electrical conductivity, it can be combined with a carbon material and used in the form of a sulfur-carbon composite.

The sulfur-carbon composite may have a particle size of 1 *µ*m to 100 *µ*m. If the particle size of the sulfur-carbon composite is less than 1 *µ*m, there is a problem that the resistance between the particles increases and an overvoltage occurs in the electrode of the lithium-sulfur battery. If the particle size exceeds 100 *µ*m, the surface area per unit weight is reduced, and thus the wetting area with the electrolyte in the electrode and the reaction site with the lithium ion are decreased, and the amount of electron transfer relative to the size of the composite is reduced, so that the reaction can be delayed, and as a result, the discharge capacity of the battery can be reduced.

In the sulfur-carbon composite, sulfur may be contained in the sulfur-carbon composite in an amount of 60 wt.% to 90 wt.%, preferably 70 wt.% to 80 wt.%, based on the total weight of the sulfur-carbon composite. If sulfur is contained in the sulfur-carbon composite in an amount of less than 60 wt.%, there may be a problem that the energy density of the battery is decreased. If sulfur is contained in the sulfur-carbon composite in an amount of more than 90 wt.%, there may be a problem that the electrical conductivity in the electrode is lowered and the functionality of the positive electrode active material is deteriorated.

The carbon material (or sulfur carrier) constituting the sulfur-carbon composite has porosity, and in particular, the carbon material used as the positive electrode active material of the present invention has characteristics of high specific surface area (3,000 m²/g or more) and high porosity (pore volume per unit weight: 0.7 to 3.0 cm³/g), and thus can support a large amount of sulfur.

The carbon material may be, but is not limited to, at least one selected from the group consisting of graphite; graphene; reduced graphene oxide (rGO); carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and activated carbon. Also, the porous carbon material may be in the form of spherical, rod-shaped, acicular, plate-shaped, tubular, or bulky.

According to one embodiment of the present invention, the positive electrode active material is contained in the slurry for manufacturing the positive electrode in an amount of 80 parts by weight to 99 parts by weight, preferably 85 parts by weight to 95 parts by weight, relative to 100 parts by weight of solid content in the slurry for preparing the positive electrode. If the positive electrode active material is contained in the slurry for preparing the positive electrode in an amount of less than 80 parts by weight, there may be a problem that the energy density of the battery is decreased. If the positive electrode active material is contained in the slurry for manufacturing the positive electrode in an amount of more than 99 parts by weight, there may be a problem that the adhesive force between the positive electrode active materials may be reduced due to the insufficient content of the binder, and electrical conductivity in the electrode may be reduced due to insufficient content of the electrically conductive material.

The electrically conductive material is used for imparting conductivity to the electrode, and can be used without any particular limitation as long as it has electronic conductivity without causing chemical change in the constituted battery. Specific examples thereof may comprise graphite such as natural graphite or artificial graphite; carbon-based materials such as carbon black, acetylene black, Ketjen black, channel black, furnace black, lamp black, thermal black and carbon fiber; metal powders or metal fibers such as copper, nickel, aluminum, and silver; electrically conductive whiskers such as zinc oxide and potassium titanate; electrically conductive metal oxides such as titanium oxide; or electrically conductive polymers such as polyphenylene derivatives, and one of these or a mixture of two or more thereof may be used.

According to one embodiment of the present invention, the electrically conductive material is contained in the slurry for manufacturing the positive electrode in an amount of 0.1 parts by weight to 15 parts by weight, preferably 1 part by weight to 10 parts by weight, more preferably 2 parts by weight to 8 parts by weight, relative to 100 parts by weight of the solid content in the slurry for the preparation of the positive electrode. If the electrically conductive material is contained in the slurry for manufacturing the positive electrode in an amount of less than 0.1 wt.%, there may be a problem that the electrical conductivity in the electrode is lowered due to insufficient content of the electrically conductive material. If the electrically conductive material is contained in the slurry for manufacturing the positive electrode in an amount of more than 15 wt.%, there may be a problem that since the amount of positive electrode active material is relatively reduced, the discharge capacity and energy density of the battery are lowered.

The present invention provides a lithium-sulfur battery comprising a negative electrode, a separator and an electrolyte together with the above-described positive electrode. The lithium-sulfur battery is manufactured by placing a battery assembly, which is formed by sequentially stacking positive electrode-separator-negative electrode, in a battery case and injecting electrolyte.

The negative electrode may comprise a negative electrode current collector and a negative electrode active material layer formed on the negative electrode current collector, and the negative electrode active material layer may comprise a negative electrode active material, a binder, and an electrically conductive material.

The negative electrode active material may comprise a material capable of reversibly intercalating or deintercalating lithium ion (Li⁺), a material capable of reacting with lithium ion to reversibly form lithium containing compounds, lithium metal, or lithium alloy. The material capable of reversibly intercalating or deintercalating lithium ion (Li⁺) can be, for example, crystalline carbon, amorphous carbon, or a mixture thereof. The material capable of reacting with lithium ion (Li⁺) to reversibly form lithium containing compounds may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

The binder, the electrically conductive material, and the negative electrode current collector may be selected with reference to the constitution of the above-described positive electrode, but is not necessarily limited thereto. In addition, the method of forming the negative electrode active material layer on the negative electrode current collector is based on a known coating method as in the positive electrode, and is not particularly limited. If lithium metal or the like is used as the negative electrode active material, the negative electrode may be constituted without a binder, an electrically conductive material, or a negative electrode current collector.

The separator is for physically separating both electrodes in the lithium-sulfur battery of the present invention, and can be used without any particular limitation as long as it is normally used as a separator in a lithium-sulfur battery. In particular, the separator is preferred as it has a low resistance to ion migration of the electrolyte and an excellent electrolyte impregnation ability. The separator may be made of a porous substrate. As the porous substrate, any porous substrate may be used as long as it is a porous substrate commonly used in electrochemical devices, and for example, a polyolefin-based porous membrane or a nonwoven fabric may be used, but is not particularly limited thereto.

Examples of the polyolefin-based porous membrane may comprise a membrane formed from each of polyethylene such as high-density polyethylene, linear low-density polyethylene, low-density polyethylene, and ultra-high molecular weight polyethylene, and polyolefin-based polymers such as polypropylene, polybutylene, and polypentene alone or polymers obtained by mixing them.

In addition to the above-mentioned polyolefin-based nonwoven fabric, the nonwoven fabric may be a nonwoven fabric formed of, for example, any polymer alone selected from polyethylene terephthalate, polybutylene terephthalate, polyester, polyacetal, polyamide, polycarbonate, polyimide, polyetheretherketone, polyethersulfone, polyphenylene oxide, polyphenylene sulfide, polyethylene naphthalene and the like, or formed of a polymer mixture thereof. The structure of the nonwoven fabric may be a spun-bond nonwoven fabric or a melt blown nonwoven fabric composed of long fibers.

The thickness of the porous substrate is not particularly limited, but may be 1 to 100 *µ*m, or 5 to 50 *µ*m. The size and porosity of the pores present in the porous substrate are also not particularly limited, but may be 0.001 to 50 *µ*m and 10 to 95%, respectively.

The electrolyte contains lithium ions, and is intended to cause an electrochemical oxidation or reduction reaction in the positive electrode and the negative electrode through them. The electrolyte may be a non-aqueous electrolyte solution or a solid electrolyte that does not react with lithium metal, but is preferably a non-aqueous electrolyte, and comprises an electrolyte salt and an organic solvent.

The electrolyte salt contained in the non-aqueous electrolyte solution is a lithium salt. The lithium salt can be used without limitation as long as it is commonly used in an electrolyte solution for a lithium secondary battery. The lithium salt may be selected from the group consisting of LiN(FSO₂)₂, LiSCN, LiN(CN)₂, LiN(CF₃SO₂)₂, LiN(CF₃CF₂SO₂)₂, LiPF₆, LiF, LiCl, LiBr, LiI, LiNO₃, LiClO₄, LiAlO₄, LiAlCl₄, LiSbF₆, LiAsF₆, LiBF₂C₂O₄, LiBC₄O₈, Li(CF₃)₂PF₄, Li(CF₃)₃PF₃, Li(CF₃)₄PF₂, Li(CF₃)₅PF, Li(CF₃)₆P, LiCF₃SO₃, LiC₄F₉SO₃, LiCF₃CF₂SO₃, LiCF₃CF₂(CF₃)₂CO, Li(CF₃SO₂)₂CH, LiCF₃(CF₂)₇SO₃, LiCF₃CO₂, LiCH₃CO₂, and combinations thereof, but is not limited thereto.

The concentration of the lithium salt may be 0.1 M to 8.0 M, preferably 0.5 M to 5.0 M, more preferably 1.0 to 3.0 M depending on various factors such as the exact composition of the electrolyte solution mixture, the solubility of the salt, the conductivity of the dissolved salt, the charge and discharge conditions of the battery, the operating temperature and other factors known in the lithium secondary battery field. If the concentration of the lithium salt is less than the above range, the conductivity of the electrolyte solution may be lowered and thus the performance of the battery may be deteriorated. If the concentration of the lithium salt exceeds the above range, the viscosity of the electrolyte solution may increase and thus the mobility of the lithium ion (Li⁺) may be reduced. Accordingly, it is preferable to select an appropriate concentration of the lithium salt within the above range.

As the organic solvent contained in the non-aqueous electrolyte solution, those commonly used in the electrolyte solution for the lithium-sulfur battery may be used without limitation. According to one embodiment of the present invention, the organic solvent may be a carbonate-based solvent, an ester-based solvent, an ether-based solvent, a ketone-based solvent, an alcohol-based solvent, or an aprotic solvent. Among them, the ether-based solvent may be typically used.

Examples of the carbonate-based solvent may specifically comprise dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), or butylene carbonate (BC), etc.

Examples of the ester-based solvent may specifically comprise methyl acetate, ethyl acetate, n-propyl acetate, 1,1-dimethyl ethyl acetate, methyl propionate, ethyl propionate, γ-butyrolactone, decanolide, valerolactone, mevalonolactone, or carprolactone, etc.

The ether-based solvent may be specifically dimethyl ether, diethyl ether, dipropyl ether, methylethyl ether, methylpropyl ether, ethylpropyl ether, dimethoxyethane, diethoxyethane, methoxyethoxyethane, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, polyethylene glycol methylethyl ether, diglyme, triglyme, tetraglyme, tetrahydrofuran, 2-methyltetrahydrofuran, or polyethylene glycol dimethyl ether, etc.

Examples of the ketone-based solvent may specifically comprise cyclohexanone, etc. Examples of the alcohol-based solvent may specifically comprise ethylalcohol, or isopropylalcohol, etc.

Examples of the aprotic solvent may specifically comprise nitriles such as acetonitrile, amides such as dimethylformamide, dioxolanes such as 1,3-dioxolane (DOL), or sulfolane, etc.

The non-aqueous organic solvents may be used alone or in combination of one or more. The mixing ratio when using in combination of one or more can be appropriately adjusted depending on the desired performance of the battery.

The electrolyte may further contain LiNO₃. If the electrolyte contains the LiNO₃, the inhibitory effect on the shuttle can be improved. The electrolyte may contain the LiNO₃ in an amount of 0.1 to 10 wt.% based on the total weight of the electrolyte.

The electrolyte may comprise at least one selected from the group consisting of a liquid electrolyte, a gel polymer electrolyte, and a solid polymer electrolyte. The electrolyte may be preferably a liquid electrolyte.

The injection of the non-aqueous electrolyte solution can be performed at an appropriate stage of the manufacturing process of the electrochemical device depending on the manufacturing process and required properties of the final product. That is, it can be applied before assembling the electrochemical device or in the final stage of assembling the electrochemical device.

The lithium-sulfur battery according to the present invention can be manufactured by lamination, stacking, and folding processes of the separator and the electrodes, in addition to the usual winding process. The shape of the lithium-sulfur battery is not particularly limited, and may be various shapes such as a cylindrical shape, a laminate shape, and a coin shape.

Hereinafter, preferred examples are presented to help the understanding of the present invention, but the following examples are provided only to make the present invention easier to understand, and the present invention is not limited thereto.

### Example

### Example 1

### 1. Manufacture of positive electrode

A binder composition was prepared by mixing butyl acrylate-styrene copolymer (product from LG Chem) with lithiated carboxymethyl cellulose (product from GL chem (GBLi-1000)) and gum arabic (products from DAEJUNG CHEMICALS & METALS CO., LTD.). In addition, sulfur (product from Sigma-Aldrich) was mixed with carbon nanotube (CNT) in a weight ratio of 75:25 using a ball mill and heat-treated at 155°C to prepare a positive electrode active material of sulfur-carbon composite. Super P was prepared as an electrically conductive material. The above-described positive electrode active material, the electrically conductive material, and the binder composition (binder, thickener and gum arabic) were added to water as a solvent and mixed by a bead milling method to prepare a slurry for preparing a positive electrode. At this time, the mixing ratio was such that positive electrode active material:electrically conductive material:binder:thickener:gum arabic was 90:5:2.5:1.5:1 as a weight ratio. The prepared slurry for manufacturing the positive electrode was applied to an aluminum foil current collector, and then dried at 50°C for 2 hours to prepare a positive electrode (energy density of positive electrode: 5.5mAh/cm²).

### 2. Manufacture of lithium-sulfur battery

A lithium-sulfur battery (CR-2032 coin cell) was assembled by preparing a negative electrode, a separator and an electrolyte as follows along with the positive electrode prepared by the above method.

### (1) Negative electrode

A lithium foil was used as a negative electrode.

### (2) Separator

A polyethylene membrane was used as a separator.

### (3) Electrolyte

An electrolyte prepared by mixing LiTFSI in a mixed solvent of dioxolane (DOL) and dimethyl ether (DME) at 0.1 molar concentration and adding LiNO₃ in an amount of 1 wt.% compared to the electrolyte solution was used as the electrolyte.

### Comparative Example 1

A lithium-sulfur battery was manufactured in the same manner as in Example 1, except that when preparing the binder composition, no gum arabic was used, and only the emulsion type binder and lithiated carboxymethyl cellulose were mixed and used, and thus the mixing ratio in the slurry for manufacturing the positive electrode was adjusted so that the positive electrode active material:electrically conductive material:binder:thickener was 91:5:2.5:1.5.

### Comparative Example 2

A lithium-sulfur battery was manufactured in the same manner as in Example 1, except that when preparing the binder composition, no lithiated carboxymethyl cellulose was used, and only the emulsion-type binder and gum arabic were mixed and used, and thus the mixing ratio in the slurry for manufacturing the positive electrode was adjusted so that the positive electrode active material:electrically conductive material:binder:gum arabic was 91.5:5:2.5:1.

### Comparative Example 3

A lithium-sulfur battery was prepared in the same manner as in Example 1, except that when preparing the binder composition, guar gum was used instead of gum arabic.

### Comparative Example 4

A lithium-sulfur battery was prepared in the same manner as in Example 1, except that when preparing the binder composition, xanthan gum was used instead of gum arabic.

### Comparative Example 5

A lithium-sulfur battery was manufactured in the same manner as in Example 1, except that the mixing ratio in the slurry for manufacturing the positive electrode was adjusted so that the positive electrode active material:electrically conductive material:binder:thickener:gum arabic was 89:5:2.5:1.5:2.

### Experimental Example: Evaluation of initial discharge performance and cycle performance of the manufactured battery

For the lithium-sulfur battery manufactured in Example 1 and the lithium-sulfur batteries manufactured in Comparative Examples 1 to 5, the cycle performance of the batteries was evaluated by charging at 0.3 C-rate and discharging at 0.5 C-rate, after charging and discharging at 0.1 C-rate in a voltage range of 1.8V to 2.5V under a temperature condition of 25°C. The cycle performance of the batteries was evaluated as the number of cycles showing 80% or more of the discharge capacity based on the initial discharge capacity, and when the number of cycles is exceeded, the discharge capacity was dropped to less than 80% based on the initial discharge capacity. Representatively, the charge/discharge profile graph of the electric potentials of the batteries with respect to the specific capacity, which were obtained by the initial charge and discharge of the lithium-sulfur batteries prepared in Example 1 and Comparative Example 1, was prepared and shown in FIG. 1 below, and the initial discharge performance and cycle performance evaluation results of all sulfur batteries are shown in Table 1 below.

**Table 1:**

| | Initial discharge capacity | Number of cycles |
|---|---|---|
| Example 1 | 1130 | 75 |
| Comparative Example 1 | 1085 | 60 |
| Comparative Example 2 | 1120 | 30 |
| Comparative Example 3 | 1100 | 20 |
| Comparative Example 4 | 1105 | 20 |
| Comparative Example 5 | 1100 | 55 |

According to Table 1, it was confirmed that as a binder composition, when gum arabic is used together with a binder and a thickener, not only the initial discharge capacity but also cycle performance is improved. Specifically, in the binder composition including gum arabic, the binder and the thickener, if gum arabic was excluded (Comparative Example 1) or the thickener was excluded (Comparative Example 2), the initial discharge performance and cycle performance were reduced. In addition, in the binder composition, if gum arabic is replaced with guar gum (Comparative Example 3) or with xanthan gum (Comparative Example 4), the initial discharge performance and cycle performance were similarly deteriorated. Even if a binder composition comprising gum arabic, a binder, and a thickener was used, when gum arabic was used more than the thickener, there was little improvement in initial discharge performance and cycle performance.

## Claims

1. A binder composition for manufacturing a positive electrode of a lithium-sulfur battery comprising a binder, a thickener and gum arabic,
wherein the binder is contained in the binder composition in an amount of 40 wt.% to 60 wt.% based on the total weight of the binder composition,
wherein the thickener is contained in the binder composition in an amount of 20 wt.% to 35 wt.% based on the total weight of the binder composition,
wherein gum arabic is contained in the binder composition in an amount of 10 wt.% to 30 wt.% based on the total weight of the binder composition, and
wherein gum arabic is contained in the binder composition in an amount of 30 parts by weight to 100 parts by weight based on 100 parts by weight of the thickener.

2. The binder composition for manufacturing the positive electrode of the lithium-sulfur battery according to claim 1, wherein the binder is selected from the group consisting of polyvinylidene fluoride (PVDF), vinylidene fluoride-hexafluoropropylene copolymer (PVDF-co-HFP), polyvinyl alcohol, polyacrylonitrile, starch, hydroxypropyl cellulose, regenerated cellulose, polyvinyl pyrrolidone, polytetrafluoroethylene, polyethylene, polypropylene, polybutyl acrylate, polypropyl acrylate, polyethyl acrylate, polyethylhexyl acrylate, polystyrene, ethylene-propylene-diene polymer (EPDM), sulfonated-EPDM, styrene-butadiene rubber(SBR), fluorine rubber, combinations thereof and copolymers thereof.

3. The binder composition for manufacturing the positive electrode of the lithium-sulfur battery according to claim 1, wherein the thickener is selected from the group consisting of carboxy methyl cellulose, methyl cellulose, hydroxypropyl cellulose, methyl hydroxypropyl cellulose, ethyl hydroxyethyl cellulose, methyl ethylhydroxyethyl cellulose, cellulose gum and combinations thereof.

4. The binder composition for manufacturing the positive electrode of the lithium-sulfur battery according to claim 1, wherein the thickener is in a lithiated form.

5. A positive electrode for a lithium-sulfur battery formed by applying a slurry for manufacturing a positive electrode comprising the binder composition according to claim 1, a positive electrode active material, and an electrically conductive material on a positive electrode current collector.

6. The positive electrode for the lithium-sulfur battery according to claim 5, wherein the binder composition is contained in the slurry for manufacturing the positive electrode in an amount of 0.01 to 10 parts by weight, relative to 100 parts by weight of the solid content in the slurry for manufacturing the positive electrode.

7. The positive electrode for the lithium-sulfur battery according to claim 5, wherein the positive electrode active material is contained in the slurry for manufacturing the positive electrode in an amount of 80 parts by weight to 99 parts by weight, relative to 100 parts by weight of the solid content in the slurry for manufacturing the positive electrode.

8. The positive electrode for the lithium-sulfur battery according to claim 5, wherein the electrically conductive material is contained in the slurry for manufacturing the positive electrode in an amount of 0.1 to 15 parts by weight, relative to 100 parts by weight of the solid content in the slurry for manufacturing the positive electrode.

9. A lithium-sulfur battery comprising the positive electrode according to claim 5, a negative electrode, a separator and an electrolyte.

## Patentansprüche

1. Bindemittelzusammensetzung zur Herstellung einer positiven Elektrode einer Lithium-Schwefel-Batterie, umfassend ein Bindemittel, ein Verdickungsmittel und Gummiarabikum,
wobei das Bindemittel in der Bindemittelzusammensetzung in einer Menge von 40 Gew.-% bis 60 Gew.-%, bezogen auf das Gesamtgewicht der Bindemittelzusammensetzung, enthalten ist,
wobei das Verdickungsmittel in der Bindemittelzusammensetzung in einer Menge von 20 Gew.-% bis 35 Gew.-%, bezogen auf das Gesamtgewicht der Bindemittelzusammensetzung, enthalten ist,
wobei Gummiarabikum in der Bindemittelzusammensetzung in einer Menge von 10 Gew.-% bis 30 Gew.-%, bezogen auf das Gesamtgewicht der Bindemittelzusammensetzung, enthalten ist, und
wobei Gummiarabikum in der Bindemittelzusammensetzung in einer Menge von 30 Gewichtsteilen bis 100 Gewichtsteilen, bezogen auf 100 Gewichtsteile des Verdickungsmittels, enthalten ist.

2. Bindemittelzusammensetzung zur Herstellung der positiven Elektrode der Lithium-Schwefel-Batterie nach Anspruch 1, wobei das Bindemittel aus der Gruppe bestehend aus Polyvinylidenfluorid (PVDF), Vinylidenfluorid-Hexafluorpropylen-Copolymer (PVDF-co-HFP), Polyvinylalkohol, Polyacrylnitril, Stärke, Hydroxypropylcellulose, regenerierter Cellulose, Polyvinylpyrrolidon, Polytetrafluorethylen, Polyethylen, Polypropylen, Polybutylacrylat, Polypropylacrylat, Polyethylacrylat, Polyethylhexylacrylat, Polystyrol, Ethylen-Propylen-Dien-Polymer (EPDM), sulfoniertem EPDM, Styrol-Butadien-Kautschuk (SBR), Fluorkautschuk, Kombinationen davon und Copolymeren davon ausgewählt ist.

3. Bindemittelzusammensetzung zur Herstellung der positiven Elektrode der Lithium-Schwefel-Batterie nach Anspruch 1, wobei das Verdickungsmittel aus der Gruppe bestehend aus Carboxymethylcellulose, Methylcellulose, Hydroxypropylcellulose, Methylhydroxypropylcellulose, Ethylhydroxyethylcellulose, Methylethylhydroxyethylcellulose, Cellulosegummi und Kombinationen davon ausgewählt ist.

4. Bindemittelzusammensetzung zur Herstellung der positiven Elektrode der Lithium-Schwefel-Batterie nach Anspruch 1, wobei das Verdickungsmittel in einer lithiierten Form vorliegt.

5. Positive Elektrode für eine Lithium-Schwefel-Batterie, gebildet durch Aufbringen einer Aufschlämmung zur Herstellung einer positiven Elektrode, umfassend die Bindemittelzusammensetzung nach Anspruch 1, ein aktives Material der positiven Elektrode und ein elektrisch leitfähiges Material auf einen Stromabnehmer der positiven Elektrode.

6. Positive Elektrode für die Lithium-Schwefel-Batterie nach Anspruch 5, wobei die Bindemittelzusammensetzung in der Aufschlämmung zur Herstellung der positiven Elektrode in einer Menge von 0,01 bis 10 Gewichtsteilen, bezogen auf 100 Gewichtsteile des Feststoffgehalts in der Aufschlämmung zur Herstellung der positiven Elektrode, enthalten ist.

7. Positive Elektrode für die Lithium-Schwefel-Batterie nach Anspruch 5, wobei das aktive Material der positiven Elektrode in der Aufschlämmung zur Herstellung der positiven Elektrode in einer Menge von 80 Gewichtsteilen bis 99 Gewichtsteilen, bezogen auf 100 Gewichtsteile des Feststoffgehalts in der Aufschlämmung zur Herstellung der positiven Elektrode, enthalten ist.

8. Positive Elektrode für die Lithium-Schwefel-Batterie nach Anspruch 5, wobei das elektrisch leitfähige Material in der Aufschlämmung zur Herstellung der positiven Elektrode in einer Menge von 0,1 bis 15 Gewichtsteilen, bezogen auf 100 Gewichtsteile des Feststoffgehalts in der Aufschlämmung zur Herstellung der positiven Elektrode, enthalten ist.

9. Lithium-Schwefel-Batterie, umfassend die positive Elektrode nach Anspruch 5, eine negative Elektrode, einen Separator und einen Elektrolyten.

## Revendications

1. Composition de liant pour la fabrication d'une électrode positive d'une batterie au lithium-soufre comprenant un liant, un épaississant et de la gomme arabique,
dans laquelle le liant est contenu dans la composition de liant dans une quantité de 40 % en poids à 60 % en poids sur la base du poids total de la composition de liant,
dans laquelle l'épaississant est contenu dans la composition de liant dans une quantité de 20 % en poids à 35 % en poids sur la base du poids total de la composition de liant,
dans laquelle la gomme arabique est contenue dans la composition de liant dans une quantité de 10 % en poids à 30 % en poids sur la base du poids total de la composition de liant, et
dans laquelle la gomme arabique est contenue dans la composition de liant dans une quantité de 30 parties en poids à 100 parties en poids sur la base de 100 parties en poids de l'épaississant.

2. Composition de liant pour la fabrication d'une électrode positive de la batterie au lithium-soufre selon la revendication 1, dans laquelle le liant est sélectionné dans le groupe constitué de fluorure de polyvinylidène (PVDF), copolymère de fluorure de vinylidène-hexafluoropropylène (PVDF-co-HFP), alcool polyvinylique, polyacrylonitrile, amidon, hydroxypropylcellulose, cellulose régénérée, pyrrolidone de polyvinyle, polytétrafluoroéthylène, polyéthylène, polypropylène, acrylate de polybutyle, acrylate de polypropyle, acrylate de polyéthyle, acrylate de polyéthylhexyle, polystyrène, polymère d'éthylène-propylène-diène (EPDM), EPDM sulfoné, caoutchouc de styrène-butadiène (SBR), caoutchouc fluoré, leurs combinaisons et leurs copolymères.

3. Composition de liant pour la fabrication d'une électrode positive de la batterie au lithium-soufre selon la revendication 1, dans laquelle l'épaississant est sélectionné dans le groupe constitué de carboxyméthylcellulose, méthylcellulose, hydroxypropylcellulose, méthylhydroxypropylcellulose, éthylydroxyéthylcellulose, méthyléthylhydroxyéthylcellulose, gomme de cellulose et leurs combinaisons.

4. Composition de liant pour la fabrication d'une électrode positive de la batterie au lithium-soufre selon la revendication 1, dans laquelle l'épaississant est sous une forme lithiée.

5. Électrode positive pour une batterie au lithium-soufre formée en appliquant une suspension épaisse pour la fabrication d'une électrode positive comprenant la composition de liant selon la revendication 1, un matériau actif d'électrode positive et un matériau électriquement conducteur sur un collecteur de courant d'électrode positive.

6. Électrode positive pour la batterie au lithium-soufre selon la revendication 5, dans laquelle la composition de liant est contenue dans la suspension épaisse pour la fabrication de l'électrode positive dans une quantité de 0,01 à 10 parties en poids, pour 100 parties en poids de la teneur en solides dans la suspension épaisse pour la fabrication de l'électrode positive.

7. Électrode positive pour la batterie au lithium-soufre selon la revendication 5, dans laquelle le matériau actif d'électrode positive est contenu dans la suspension épaisse pour la fabrication de l'électrode positive dans une quantité de 80 parties en poids à 99 parties en poids, pour 100 parties en poids de la teneur en solides dans la suspension épaisse pour la fabrication de l'électrode positive.

8. Électrode positive pour la batterie au lithium-soufre selon la revendication 5, dans laquelle le matériau électriquement conducteur est contenu dans la suspension épaisse pour la fabrication de l'électrode positive dans une quantité de 0,1 à 15 parties en poids, pour 100 parties en poids de la teneur en solides dans la suspension épaisse pour la fabrication de l'électrode positive.

9. Batterie au lithium-soufre comprenant l'électrode positive selon la revendication 5, une électrode négative, un séparateur et un électrolyte.
